# FASCICULE DE BREVET EUROPEEN

(11) **EP 3 710 386 B1**
(45) Date de publication et mention de la délivrance du brevet: **07.02.2024**
(21) Numéro de dépôt: 18808438.8
(22) Date de dépôt: 30.10.2018
(51) Int. Cl.: B65G 51/01, B65B 25/04

(54) **DISPOSITIF DE GROUPAGE EN LOTS DE FRUITS OU LÉGUMES À CANAUX D'ACCUMULATION DOTÉS DE PASSAGES DE DÉRIVATION**
VORRICHTUNG ZUR STAPELWEISEN VERARBEITUNG VON OBST ODER GEMÜSE, DEREN SAMMELKANÄLE MIT BYPASSKANÄLEN VERSEHEN SIND
DEVICE FOR BATCHING FRUIT OR VEGETABLES, THE ACCUMULATION CANALS OF WHICH ARE PROVIDED WITH BYPASS PASSAGES

(30) Priorité: 15.11.2017 FR 1760757
(43) Date de publication de la demande: 23.09.2020
(73) Titulaire: MAF Agrobotic, 82000 Montauban (FR)
(72) Inventeur: BLANC, Philippe, 82000 Montauban (FR)
(74) Mandataire: BARRE LAFORGUE
(86) Numéro de dépôt international: PCT/FR2018/052696
(87) Numéro de publication internationale: WO 2019/097135

(56) Documents cités:
- EP-A1- 0 729 908
- US-A- 3 656 272
- US-A1- 2005 210 831

## Description

L'invention concerne un procédé et un dispositif de groupage en lots d'objets au moins semi-flottants appartenant au groupe des fruits et légumes (pommes, poires, tomates,...), dans au moins un canal hydraulique d'accumulation des objets par lots. Dans tout le texte, on désigne par "objet au moins semi-flottant" tout objet présentant une flottaison suffisante dans un courant hydraulique pour pouvoir être transporté par ce dernier. En conséquence, cette terminologie couvre non seulement les objets flottant en surface du courant hydraulique, comme la plupart des variétés de pommes, mais également en particulier les objets flottant entre deux eaux, comme par exemple les poires, ou encore les objets flottant dans le courant hydraulique au voisinage du -ou sur le- fond d'un canal hydraulique.

Dans tout le texte, les termes "amont" et "aval" sont utilisés en référence au sens de circulation des objets dans le dispositif de groupage, correspondant également au sens de circulation du courant hydraulique transportant ces objets.

Dans les installations de calibrage ou de tri d'objets au moins semi-flottants appartenant au groupe des fruits et légumes présentant des canaux pour le transport hydraulique des objets (permettant notamment d'éviter de les endommager, de tels objets étant sensibles aux chocs et donc fragiles), il est intéressant de pouvoir réduire la longueur totale de chaque canal d'accumulation permettant de regrouper les objets par lots, et donc la surface au sol de l'ensemble de l'installation. Différents dispositifs pour former une superposition d'objets dans de tels canaux hydrauliques ont été proposés.

EP2931635 et US9694366 décrivent un dispositif de groupage à superposition, dite superposition hydraulique, des objets dans les canaux d'accumulation, ne nécessitant pas de mécanisme spécifique motorisé et/ou comprenant de nombreuses pièces mobiles pour réaliser cette superposition. Il a en effet constaté avec surprise qu'il existe une plage de vitesse du courant hydraulique dans laquelle la vitesse est suffisante pour entraîner spontanément cette superposition hydraulique, mais pour autant est relativement faible et n'entraîne ni turbulences intempestives, ni détérioration des objets, ni débordement par ailleurs du canal d'accumulation. En effet, les objets accumulés (et éventuellement superposés) dans le canal d'accumulation, et le dispositif de retenue/libération qui est transparent au courant hydraulique, s'opposent à l'écoulement du courant hydraulique, et produisent une réduction de vitesse du courant hydraulique qui peut être relativement importante et est d'autant plus importante que la hauteur de superposition des objets dans la zone de superposition est elle-même importante. En conséquence, on pouvait s'attendre à ce qu'une augmentation de vitesse du courant hydraulique à l'alimentation produise des phénomènes de turbulences, et que la réduction de vitesse par les produits accumulés produise un débordement du courant hydraulique sur les côtés du canal d'accumulation. Or, il n'en est rien dans la plupart des cas, notamment avec des objets flottant en surface tels que la majorité des variétés de pommes, et on constate en pratique qu'il existe une vitesse du courant hydraulique suffisante pour entraîner spontanément une superposition des objets alors que le dispositif de retenue/libération est à l'état fermé, sans pour autant entraîner des phénomènes de turbulences risquant de détériorer les produits ni d'entraîner un débordement du canal d'accumulation. Par ailleurs US 2005/210831 A1 divulgue un dispositif selon le préambule de la revendication 1.

L'inventeur a néanmoins constaté que dans certaines situations, il existe des risques de débordement du courant hydraulique en dehors des canaux d'accumulation.

En particulier, lorsque de nombreux canaux d'accumulation sont remplis d'objets -notamment d'objets superposés les uns sur les autres retenus contre le dispositif de retenue/libération-, le débit total délivré par la pompe de recirculation n'arrive pas à traverser l'ensemble formé par les différents canaux d'accumulation, et est donc amené à déborder sur le côté de certains au moins des canaux d'accumulation.

En outre, certains objets, lorsqu'ils s'accumulent superposés contre le dispositif de retenue/libération d'un canal d'accumulation forment, au moins à partir d'une certaine quantité d'objets ainsi accumulés, un barrage important à l'écoulement du courant dans le canal à travers ces objets. Tel est le cas en particulier avec des objets de faibles dimensions et/ou avec certains objets tels que les poires, qui du fait de leur forme particulière et/ou de leur faible flottabilité, s'accumulent en se superposant sur toute la hauteur du canal d'accumulation et en s'imbriquant les uns dans les autres en ne laissant que de faibles interstices de passage du courant entre eux. Il en résulte un risque de débordement du courant hydraulique à l'amont de la zone de superposition. Il serait bien sûr possible de réduire la vitesse du courant hydraulique pour éviter un tel risque. Néanmoins, une telle vitesse réduite n'est alors pas nécessairement suffisante pour entraîner la superposition hydraulique, et si elle l'est, entraîne en tout cas un ralentissement indésirable du fonctionnement du dispositif au détriment de sa productivité.

Il est donc nécessaire de pouvoir maintenir une vitesse suffisante du courant hydraulique pour entraîner le transport des objets et leur accumulation-notamment leur superposition- dans les canaux d'accumulation, tout en évitant tout débordement du courant hydraulique en dehors des canaux.

Il est à noter que si ce problème se pose avec acuité dans le cas d'un dispositif de groupage à superposition hydraulique des objets tel que mentionné ci-dessus, il peut aussi se poser avec des dispositifs de groupage à superposition non entièrement hydraulique, c'est à dire au moins partiellement mécanique (par exemple avec un dispositif forçant une immersion partielle des objets) ou entièrement mécanique des objets, voire même sans superposition des objets.

Il est à noter en outre que de tels dispositifs de groupage sont utilisés en particulier dans les installations agricoles -notamment pour le tri de fruits ou légumes- et ne sont en général pas dédiés à une seule famille et variété de fruits ou légumes. Au contraire un même dispositif de groupage doit pouvoir être utilisé pour diverses familles et/ou variétés et/ou caractéristiques physiques (dimensions, poids, densités...) de fruits ou légumes, et ce de façon simple et rapide, notamment sans nécessiter des réglages ou ajustements complexes nécessitant l'intervention d'experts lors du changement des fruits ou légumes traités. À ce titre, il est en particulier important d'éviter tout risque de débordement du courant hydraulique en dehors des canaux d'accumulation quels que soient les objets traités et lors d'un changement de famille et/ou de variété et/ou de caractéristiques physiques des objets traités.

L'invention vise donc à résoudre ce problème général en proposant un dispositif de groupage en lots d'objets au moins semi-flottants appartenant au groupe des fruits et légumes dans lequel les risques de débordement du courant hydraulique en dehors des canaux d'accumulation sont évités avec certitude quelle que soient les circonstances.

L'invention vise en particulier à proposer un tel dispositif de groupage permettant d'accepter diverses familles et/ou variétés et/ou caractéristiques physiques de fruits ou légumes sans risque de débordement du courant hydraulique en dehors des canaux d'accumulation.

L'invention vise plus particulièrement à proposer un tel dispositif de groupage à superposition -notamment à superposition hydraulique- des objets dans une zone de superposition de chaque canal d'accumulation permettant d'accepter diverses familles et/ou variétés de fruits ou légumes sans risque de débordement du courant hydraulique à l'amont de la zone de superposition.

L'invention vise plus particulièrement à proposer un tel dispositif de groupage comprenant une pluralité de canaux d'accumulation -notamment une pluralité de canaux d'accumulation débouchant tous dans un seul et même canal de collecte- et dans lequel les différents canaux d'accumulation sont alimentés à partir d'une seule et même pompe commune, le débit spécifique du courant hydraulique alimenté à l'entrée de chaque canal d'accumulation par le dispositif d'alimentation hydraulique n'ayant pas à être ajusté individuellement spécifiquement pour éviter les débordements, et en particulier ne nécessitant pas une pompe propre à chaque canal d'accumulation.

L'invention vise plus particulièrement à proposer un tel dispositif de groupage comprenant au moins une ligne, dite ligne de calibrage, de convoyage, d'analyse et de tri des objets en fonction de critères prédéterminés, ladite ligne de calibrage comprenant des moyens de déchargement sélectif des objets dans différents canaux d'accumulation en fonctions desdits critères prédéterminés. Elle vise donc à proposer un tel dispositif de groupage particulièrement adapté pour pouvoir faire office d'unité de tri des objets selon des critères prédéterminés.

Pour ce faire l'invention concerne un dispositif de groupage en lots d'objets au moins semi-flottants appartenant au groupe des fruits et légumes selon le contenu de la revendication 1 comprenant notamment :
- une pluralité de canaux, dit canaux d'accumulation,
- un dispositif d'alimentation hydraulique adapté pour former, dans chaque canal d'accumulation, un débit d'un courant hydraulique apte à transporter les objets le long du canal d'accumulation,
- un dispositif d'alimentation en objets d'une portion amont de chaque canal d'accumulation,
- un canal hydraulique, dit canal de collecte, à l'aval de et en communication avec chaque canal d'accumulation de façon à pouvoir recevoir le courant hydraulique et des objets évacués par le canal d'accumulation,
- chaque canal d'accumulation étant doté, à une extrémité aval de ce dernier, d'un dispositif de retenue/libération des objets qu'il contient, ce dispositif de retenue/libération étant transparent au courant hydraulique circulant dans le canal d'accumulation, et permettant, en une position fermée, de retenir les objets dans le canal d'accumulation tout en laissant passer le courant hydraulique, et, en position ouverte, de les libérer sous l'effet du courant hydraulique pour les transférer dans le canal de collecte,
- chaque canal d'accumulation présente, au moins dans une portion aval de ce dernier, dite zone de superposition, une hauteur supérieure à l'encombrement vertical maximum de chaque objet de façon à pouvoir recevoir des objets superposés, caractérisé en ce que chaque canal d'accumulation comprend au moins un passage de dérivation du courant hydraulique :
- s'étendant depuis au moins une entrée du passage de dérivation située à l'amont du dispositif de retenue/libération et à l'amont de la zone de superposition, jusqu'à au moins une sortie du passage de dérivation débouchant à l'aval du dispositif de retenue/libération,
- adapté pour dériver une partie du débit du courant hydraulique formé par le dispositif d'alimentation hydraulique.

Chaque canal d'accumulation étant doté d'au moins un tel passage de dérivation, les risques de débordement du courant hydraulique en dehors des canaux d'accumulation sont évités avec certitude, et ce quelle que soit la nature (famille et/ou variété et/ou caractéristiques physiques) des fruits ou légumes traités, quel que soit le taux de remplissage -notamment de superposition- des différents canaux d'accumulation et quels que soient la vitesse et/ou le débit d'alimentation hydraulique de chaque canal d'accumulation.

Ainsi, il est possible de gérer globalement l'intégralité du circuit hydraulique du dispositif à partir d'une seule et même pompe, notamment pour l'alimentation des différents canaux d'accumulation et du canal de collecte et d'ajuster la vitesse du courant hydraulique dans chaque canal d'accumulation uniquement pour optimiser le transport des objets et/ou leur superposition et/ou la productivité de l'installation.

Dans certains modes de réalisation avantageux conformes à l'invention, chaque canal d'accumulation présente, au moins dans une portion aval de ce dernier, dite zone de superposition, une hauteur supérieure à l'encombrement vertical maximum de chaque objet de façon à pouvoir recevoir des objets superposés. Avantageusement et selon l'invention chaque canal d'accumulation comprend au moins un passage de dérivation s'étendant depuis au moins une -notamment une unique- entrée ménagée à l'amont de la zone de superposition. Grâce à l'invention, il est possible de minimiser la hauteur des canaux d'accumulation et de superposer les objets sur toute la hauteur de chaque canal d'accumulation, tout risque de débordement étant évité grâce aux passages de dérivation.

Cette superposition des objets dans une zone de superposition de chaque canal d'accumulation peut être obtenue de toute manière appropriée, par exemple par des moyens mécaniques d'immersion (manche d'immersion et/ou un pan incliné d'immersion et/ou convoyeur d'immersion) des objets à l'amont de la zone de superposition.

Néanmoins, l'invention est particulièrement avantageuse dans le cas d'une superposition hydraulique telle que décrite par EP2931635 et US9694366. Ainsi, dans certains modes de réalisation avantageux conformes à l'invention ledit dispositif d'alimentation hydraulique est adapté pour pouvoir former dans chaque canal d'accumulation un courant hydraulique présentant au moins localement une vitesse apte à entraîner une superposition des objets retenus dans la zone de superposition du canal d'accumulation contre le dispositif de retenue/libération fermé de façon à retenir les objets.

En outre, l'ajustement de la vitesse du courant hydraulique pour entraîner une superposition des objets peut faire l'objet de différentes variantes. Il est possible par exemple de maintenir la vitesse du courant hydraulique en permanence à une valeur constante et unique susceptible d'entraîner une superposition des objets. Il est aussi possible de compter les objets (ou le poids total des objets) introduits dans chaque canal d'accumulation, et d'ajuster la vitesse du courant hydraulique à une valeur susceptible d'entraîner une superposition des objets dans un canal d'accumulation après avoir alimenté ce canal d'accumulation avec un nombre (ou un poids) minimum prédéterminé d'objets. Il est également possible de détecter (par exemple avec des cellules photoélectriques) la hauteur occupée par les objets dans le canal d'accumulation en un ou plusieurs points le long de ce dernier et d'ajuster la vitesse du courant hydraulique à une valeur susceptible d'entraîner une superposition des objets lorsque cette hauteur correspond à une couche d'objets. Il est également possible de détecter la présence d'objets dans une partie amonts de la zone de superposition, cette présence étant représentative de la formation d'au moins une couche d'objets, la vitesse du courant hydraulique étant ensuite ajustée pour entraîner une superposition des objets.

L'ajustement des différentes vitesses du courant hydraulique peut être fait de façon discrète, c'est-à-dire en sélectionnant une valeur de vitesse parmi une pluralité de valeurs prédéterminées ; ou au contraire de façon continue en augmentant continûment la vitesse du courant hydraulique jusqu'à ce qu'elle atteigne une valeur à partir de laquelle une superposition des objets est détectée en au moins une zone prédéterminée du canal d'accumulation.

Il est également possible d'ajuster la vitesse du courant hydraulique à une valeur susceptible d'entraîner une superposition des objets en un nombre de couches supérieur à 2. Par exemple la vitesse du courant hydraulique est ajustée à une première valeur tant que le nombre d'objets introduits dans un canal d'accumulation est inférieur ou égal à un premier nombre correspondant à une couche d'objets -notamment une couche d'objets flottants en surface- dans ce canal d'accumulation ; puis la vitesse du courant hydraulique est ajustée à une deuxième valeur entraînant une superposition des objets en deux couches lorsque le nombre d'objets introduits dans le canal d'accumulation dépasse le premier nombre et tant qu'il est inférieur ou égal à un deuxième nombre correspondant à la présence de deux couches d'objets superposés dans le canal d'accumulation ; puis la vitesse du courant hydraulique est ajustée une troisième valeur entraînant une superposition des objets en trois couches lorsque le nombre d'objets introduits dans le canal d'accumulation dépasse le deuxième nombre, et tant qu'il est inférieur ou égal à un troisième nombre correspondant à la présence de trois couches objets superposées dans le canal d'accumulation etc.

Avantageusement, dans certains modes de réalisation conformes à l'invention la présence d'objets dans une zone amont de chaque canal d'accumulation est détectée ; en l'absence de détection d'objets dans ladite zone amont, une première valeur de vitesse est impartie au courant hydraulique à l'aval de ladite zone amont dans le canal d'accumulation ; sur détection de la présence d'objets dans ladite zone amont, une deuxième valeur de vitesse est impartie au courant hydraulique à l'aval de ladite zone amont dans le canal d'accumulation, cette deuxième valeur étant supérieure à la dite première valeur et apte à entraîner une superposition des objets dans la zone de superposition du canal d'accumulation contre le dispositif de retenue/libération fermé de façon à retenir les objets. Ladite première valeur de vitesse est avantageusement adaptée pour permettre l'alimentation en objets de la zone de superposition et l'accumulation d'objets dans la zone de superposition, en évitant toute détérioration des objets sous l'effet de chocs des objets sur le dispositif de retenue/libération et entre eux. Ainsi, la vitesse du courant hydraulique est initialement ajustée à une première valeur relativement faible suffisante pour commencer à alimenter le canal hydraulique en objets en minimisant les chocs des objets les uns contre les autres lors de cette alimentation initiale qui a pour effet de former une première couche d'objets -notamment une première couche d'objets flottant à la surface du courant hydraulique- dans le canal d'accumulation. Cette première valeur de vitesse du courant hydraulique n'est par contre pas nécessairement suffisante pour entraîner elle-même une superposition hydraulique des produits. Lorsque des objets sont détectés dans la zone amont, c'est-à-dire lorsqu'une première couche d'objets est réalisée, ce risque de choc n'existe plus, et il est alors possible d'augmenter la vitesse du courant hydraulique à une deuxième valeur suffisante pendant au moins une certaine durée pour entraîner alors une superposition hydraulique des objets dans la zone de superposition.

La vitesse du courant hydraulique formé dans chaque canal d'accumulation peut être ajustée pa des moyenhs der réglage du débit de liquide délivré dans une entrée amont de chaque canal d'accumulation. Ce réglage de débit peut lui-même être effectué à l'aide d'une simple vanne papillon et/ou par ajustement du débit délivré par une pompe, dite pompe de canal, à l'amont de chaque canal d'accumulation, ou autrement. C'est cependant un avantage de l'invention que de permettre de s'affranchir d'une telle pompe de canal à l'amont de chaque canal d'accumulation.

Ainsi, dans certains modes de réalisation possibles de l'invention ledit dispositif d'alimentation hydraulique comprend, à l'amont de chaque canal d'accumulation, une vanne commandée, dite vanne de canal, agencée de façon à pouvoir être placée au moins dans une position correspondant à une valeur de vitesse du courant hydraulique apte à entraîner une superposition des objets dans la zone de superposition du canal d'accumulation contre le dispositif de retenue/libération fermé de façon à retenir les objets. Chaque vanne de canal est par exemple agencée de façon à pouvoir être placée dans au moins une première position correspondant à une première valeur de vitesse moyenne du courant hydraulique dans ledit canal d'accumulation, et dans au moins une deuxième position correspondant à au moins une deuxième valeur, supérieure à chaque première valeur, de vitesse moyenne du courant hydraulique apte à entraîner une superposition des objets dans la zone de superposition du canal d'accumulation contre le dispositif de retenue/libération fermé de façon à retenir les objets. Il peut être prévu une unité de commande adaptée pour commander chaque vanne de canal entre lesdites positions.

Dans certains modes de réalisation possibles de l'invention, le courant hydraulique est localement accéléré par une restriction de section transversale du canal d'accumulation -notamment par un ressaut du fond et/ou par une restriction de largeur du canal d'accumulation- ménagée à l'amont -notamment à l'extrémité amont-de ladite zone de superposition. Cette restriction de section est avantageusement ménagée à l'aval -notamment immédiatement à l'aval- de ladite zone amont (dans laquelle la présence des objets est détectée) et à l'aval -notamment immédiatement à l'aval- de ladite portion amont recevant l'alimentation en objets et une alimentation hydraulique.

Une telle restriction de section transversale (ou col) dans un canal d'accumulation a pour effet d'augmenter localement la vitesse du courant hydraulique. De préférence, ladite restriction de section transversale du canal d'accumulation est obtenue par un ressaut s'étendant vers le haut par rapport au fond du canal d'accumulation, sans modification de sa largeur, et s'étend sur une faible longueur non nulle à l'amont de ladite zone de superposition et à l'aval de ladite zone amont dans laquelle la présence des objets est détectée. Ainsi, dans certains modes de réalisation avantageux, chaque canal d'accumulation comprend un fond, des parois latérales et, à l'amont de ladite zone de superposition, un ressaut par rapport au fond formant une restriction de section transversale du canal d'accumulation.

Cette accélération de la vitesse localement dans le canal d'accumulation permet d'assurer en particulier que les objets, après superposition, ne remontent pas vers l'amont au-delà de ladite restriction de section en tendant à se réaligner avec un moindre taux de superposition lorsque la vitesse du courant hydraulique est ramenée à ladite première valeur. En outre, cette restriction de section permet d'obtenir une superposition hydraulique sous l'effet de la vitesse localement accélérée pour une moindre valeur de vitesse moyenne du courant hydraulique et un moindre débit total du courant hydraulique dans le canal d'accumulation.

Dans les modes de réalisation mentionnée ci-dessus dans lesquels le dispositif de groupage comporte des moyens d'ajustement individuel de la vitesse d'alimentation de chaque canal d'accumulation, la vitesse du courant hydraulique peut être maintenue à la dite deuxième valeur pendant une durée prédéterminée après détection de la présence d'objets à ladite zone amont. Dans ces modes de réalisation un dispositif de groupage selon l'invention est alors aussi caractérisé en ce qu'il comprend en outre au moins un capteur de présence d'objets dans une zone amont de chaque canal d'accumulation, chaque capteur de présence étant relié à l'unité de commande, et en ce que l'unité de commande est adaptée pour commander chaque vanne de canal dans une deuxième position (apte à entraîner une superposition hydraulique tel que mentionné ci-dessus) sur réception d'un signal du capteur de présence représentatif de la présence d'objets dans ladite zone amont du canal d'accumulation correspondant.

Avantageusement cette durée est déterminée pour assurer que la superposition des objets dans la zone de superposition ait pour effet de repousser tous les objets vers l'aval au-delà de la restriction de section, de préférence immédiatement à l'aval de la restriction de section. Autrement dit, ladite durée pendant laquelle la vitesse du courant hydraulique est ajustée à la deuxième valeur entraînant la superposition des objets est choisie de telle sorte que le front amont des objets accumulés dans la zone de superposition est situé à l'aval -notamment immédiatement à l'aval- de la zone du canal d'accumulation présentant ladite restriction de section, c'est-à-dire à l'extrémité amont de la zone de superposition. La présence d'objets dans ladite zone amont n'est alors plus détectée. Cette durée peut être typiquement de l'ordre de quelques dixièmes de seconde à quelques secondes. À la fin de ladite durée prédéterminée, la vitesse du courant hydraulique peut être ramenée à ladite première valeur adaptée pour l'alimentation en objets du canal d'accumulation dans des conditions optimales. Les objets continuant à être alimentés dans le canal d'accumulation s'accumulent les uns contre les autres vers l'amont à partir de ce front amont, en regard de la zone présentant ladite restriction de section (c'est-à-dire au-dessus du ressaut du fond dans le mode de réalisation mentionné ci-dessus), jusqu'à ce que la présence d'objets soit à nouveau détectée dans ladite zone amont. Le procédé est alors réitéré en ajustant la vitesse du courant hydraulique à ladite deuxième valeur pour réaliser à nouveau une superposition d'objets qui sont repoussés vers le dispositif de retenue/libération fermé. Avantageusement et selon l'invention, ladite première valeur de la vitesse ainsi que la restriction de section sont choisies de telle sorte que les objets peuvent être superposés en s'étendant depuis l'aval de la restriction de section jusqu'au dispositif de retenue/libération sans avoir tendance à s'étaler de nouveau en un moindre taux de superposition.

Un dispositif de groupage selon l'invention peut être caractérisé également par tout ou partie des caractéristiques mentionnées dans EP2931635 ou US9694366.

Dans un dispositif de groupage selon l'invention chaque canal d'accumulation peut être doté d'une pluralité de passages de dérivation, par exemple présentant des entrées disposées à des endroits différents du canal d'accumulation. Néanmoins, dans certains modes de réalisation de l'invention, chaque canal d'accumulation est doté d'un unique passage de dérivation.

De même, rien n'empêche de prévoir qu'un même passage de dérivation puisse être alimenté à partir de plusieurs entrées distinctes, disposées à différents endroits du canal d'accumulation. Cela étant, dans certains modes de réalisation de l'invention, chaque passage de dérivation est doté d'une unique entrée. De même, avantageusement, chaque passage de dérivation est doté d'une unique sortie.

Par ailleurs, chaque entrée d'un passage de dérivation est placée de telle sorte qu'elle peut être alimentée par une partie du courant hydraulique circulant dans le canal d'accumulation. Rien n'empêche de prévoir au moins une telle entrée s'étendant au moins pour partie au niveau d'une paroi latérale du canal d'accumulation. Néanmoins, dans certains modes de réalisation conforme à l'invention, chaque canal d'accumulation comprend un fond (sur lequel le courant hydraulique circule entre la portion amont du canal d'accumulation et le dispositif de retenue/libération des objets), des parois latérales et au moins un passage de dérivation s'étendant depuis au moins une -notamment une unique- entrée ménagée dans le fond du canal d'accumulation. Un tel passage de dérivation est donc formé indépendamment du fond et des parois latérales du canal d'accumulation, et ne modifie donc pas les caractéristiques du canal d'accumulation lui-même, qui peut être en particulier nettoyé simplement de façon habituelle. En outre, ladite partie du courant hydraulique qui est dérivée dans un tel passage de dérivation peut s'écouler dans le passage de dérivation par simple gravité, sans nécessiter de pompage spécifique.

De même, rien n'empêche de prévoir un ou plusieurs passages de dérivation s'étendant sur le côté d'un canal d'accumulation. Néanmoins, avantageusement et selon l'invention au moins un passage de dérivation de chaque canal d'accumulation s'étend sous le canal d'accumulation.

Rien n'empêche de prévoir un ou plusieurs passages de dérivation formé lui-même d'un canal (c'est-à-dire présentant un fond et les parois latérales). Néanmoins, avantageusement et selon l'invention, au moins un -notamment chaque- passage de dérivation est formé d'au moins une conduite, c'est-à-dire est fermé entre chaque entrée et chaque sortie du passage de dérivation. En particulier, dans certains modes de réalisation, au moins un -notamment chaque- passage de dérivation est formé d'une conduite étendant entre une entrée et une sortie de cette conduite.

Dans certains modes de réalisation préférentiels, chaque canal d'accumulation comprend un passage de dérivation formé d'une conduite s'étendant sous le canal d'accumulation entre une entrée du passage de dérivation ménagée dans le fond du canal d'accumulation et une sortie débouchant à l'aval dispositif de retenue/libération.

Par ailleurs, dans les modes de réalisation mentionnés ci-dessus dans lesquels chaque canal d'accumulation comprend un ressaut par rapport au fond formant une restriction de section, il est particulièrement avantageux que chaque canal d'accumulation comprenne au moins un passage de dérivation s'étendant depuis au moins une entrée ménagée dans une zone du fond comprenant ledit ressaut.

Plus particulièrement, dans certains modes de réalisation chaque canal d'accumulation comprend au moins un passage de dérivation s'étendant depuis au moins une entrée formée par une grille formant au moins pour partie ledit ressaut.

Encore plus particulièrement et avantageusement, ledit ressaut comprend une partie amont pleine et une partie aval formant ladite grille d'entrée d'un passage de dérivation.

Par ailleurs, la sortie de chaque passage de dérivation débouche à l'aval du dispositif de retenue/libération. Avantageusement et selon l'invention au moins un passage de dérivation de chaque canal d'accumulation présente une sortie débouchant dans ledit canal de collecte sous le dispositif de retenue/libération. Dans ces modes de réalisation, le fond du canal de collecte est donc disposé à un niveau plus bas que le fond de chaque canal d'accumulation. Le courant hydraulique peut ainsi s'écouler par simple gravité dans le passage de dérivation, sans nécessiter de pompage.

En outre, dans certains modes de réalisation préférentiels d'un dispositif de groupage selon l'invention, au moins un -notamment chaque- passage de dérivation de chaque canal d'accumulation comprend une vanne, dite vanne de dérivation, adaptée pour permettre un ajustement de ladite partie du débit du courant hydraulique dérivée par le passage de dérivation.

Une telle vanne de dérivation permet d'ajuster la valeur du débit qui est dérivé par le passage de dérivation du canal d'accumulation, notamment en fonction de la famille et/ou de la variété et/ou des caractéristiques physiques des fruits ou légumes. En particulier, elle permet de minimiser cette valeur du débit dérivé et d'optimiser au contraire le débit non dérivé qui circule dans le canal d'accumulation pour transporter les objets et les accumuler contre le dispositif de retenue/libération. Ainsi, lorsque les objets sont de nature à former un barrage important à l'écoulement du courant dans le canal d'accumulation, par exemple dans le cas de poires, la vanne de dérivation peut être ouverte au maximum de façon à empêcher tout risque de débordement. Au contraire, lorsque les objets alimentés dans le canal d'accumulation sont de nature à former un barrage moins important, la vanne de dérivation peut être plus ou moins fermée, voire être totalement fermée par exemple dans le cas de pommes flottant en surface. La vanne de dérivation peut être placée en position intermédiaire selon la nature des objets, par exemple dans le cas de pommes de petit calibre.

Cela étant, un dispositif de groupage selon l'invention peut être exempt de vanne de dérivation, notamment si ce dispositif de groupage est destiné à traiter uniquement des objets de même nature, par exemple uniquement des poires.

Une telle vanne de dérivation présente également d'autres avantages : elle permet de fermer temporairement le passage de dérivation pour évacuer d'éventuels objets qui se seraient accumulés à l'entrée de ce passage de dérivation sous l'effet d'aspiration du courant hydraulique dans ce passage de dérivation ; elle permet d'ajuster temporairement le débit du courant hydraulique circulant dans le canal d'accumulation sans avoir à modifier la vitesse de débit du courant hydraulique alimenté à l'entrée du canal d'accumulation, par exemple pour faciliter l'évacuation des objets vers le canal de collecte, notamment en fin d'évacuation.

En particulier, l'ajustement du débit délivré dans un tel passage de dérivation par une telle vanne de dérivation permet ainsi d'ajuster la vitesse du courant hydraulique localement au niveau de la restriction de section et à l'aval du ressaut en fonction des caractéristiques des objets alimentés dans le canal d'accumulation. En particulier, en fermant la vanne de dérivation, il est possible d'accélérer pendant une certaine durée la vitesse du courant hydraulique au niveau dudit ressaut, pour favoriser la superposition des objets et leur évacuation si certains d'entre eux s'étaient accumulés sur le ressaut du fait de l'aspiration par le passage de dérivation.

Par ailleurs, dans un dispositif de groupage selon l'invention, chaque vanne de dérivation peut être disposée à tout endroit du passage dérivation. Cela étant, dans certains modes de réalisation avantageux ladite vanne de dérivation est disposée à une extrémité aval dudit passage de dérivation. De la sorte, il est en particulier possible de nettoyer facilement le passage de dérivation à l'aide d'un dispositif de brossage introduit par l'entrée de ce dernier.

Dans certains modes de réalisation avantageux d'un dispositif de groupage selon l'invention chaque vanne de dérivation comporte un dispositif de commande individuelle adapté pour permettre un ajustement individuel de ladite partie du débit dérivée du canal d'accumulation indépendamment de la dite partie du débit dérivée de chaque autre canal d'accumulation. Cela étant, rien n'empêche, en variante ou en combinaison, de prévoir un type de commande commun pour l'intégralité des différentes vannes de dérivation des différents passages de dérivation des différents canaux d'accumulation du dispositif de groupage.

En outre, dans certains modes de réalisation un dispositif de groupage selon l'invention ledit dispositif d'alimentation en objets est un dispositif d'alimentation sélective comprenant au moins une ligne, dite ligne de calibrage, de convoyage, d'analyse et de tri des objets en fonction de critères prédéterminés, ladite ligne de calibrage comprenant des moyens de déchargement sélectif des objets dans les différents canaux d'accumulation. Il s'agit donc d'une unité de tri de fruits ou légumes selon des critères de tri prédéterminés.

Plus particulièrement dans certains modes de réalisation avantageux les différents canaux d'accumulation sont parallèles les uns aux autres et chaque ligne de calibrage du dispositif d'alimentation sélective est au moins sensiblement orthogonale à chaque canal d'accumulation. De même, le canal de collecte est avantageusement orthogonal aux canaux d'accumulation. Avantageusement, un dispositif de groupage selon l'invention comprend également au moins un poste de réception de lots d'objets délivrés par ledit canal de collecte, et un circuit de recirculation du courant hydraulique entre chaque poste de réception de lots d'objets et ledit dispositif d'alimentation hydraulique de chaque canal d'accumulation. Dans certains modes de réalisation possibles d'un dispositif de groupage selon l'invention ledit circuit de recirculation comprend une pompe unique.

L'invention s'étend également à un procédé de groupage mis en oeuvre dans un dispositif de groupage selon l'invention.

L'invention concerne également un dispositif et un procédé de groupage caractérisés, en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

D'autres buts, caractéristiques et avantages de l'invention apparaîtront à la lecture de la description suivante donnée à titre non limitatif de certains de ses modes de réalisation possibles et qui se réfère aux figures annexées dans lesquelles :

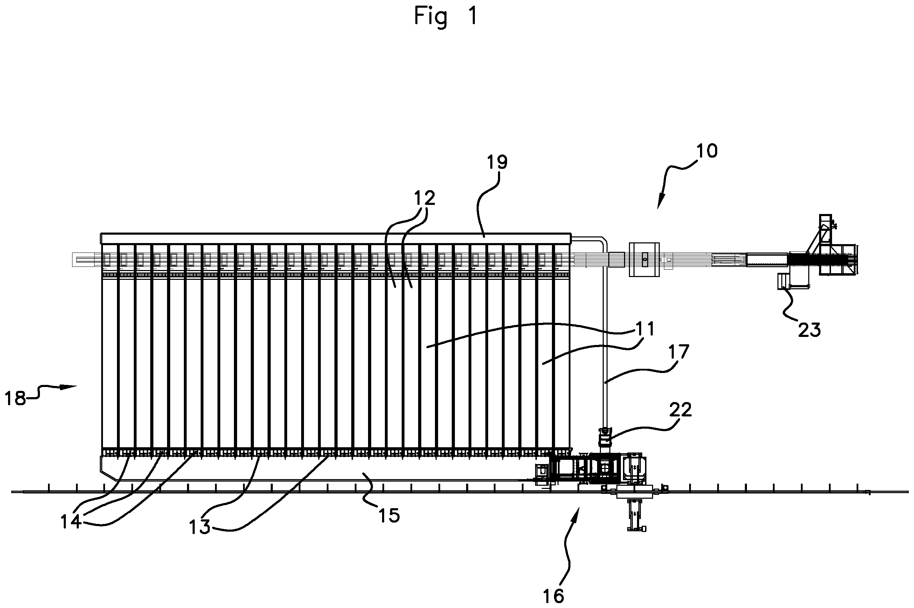

- la figure 1 est une vue schématique de dessus d'un dispositif de groupage selon l'invention,

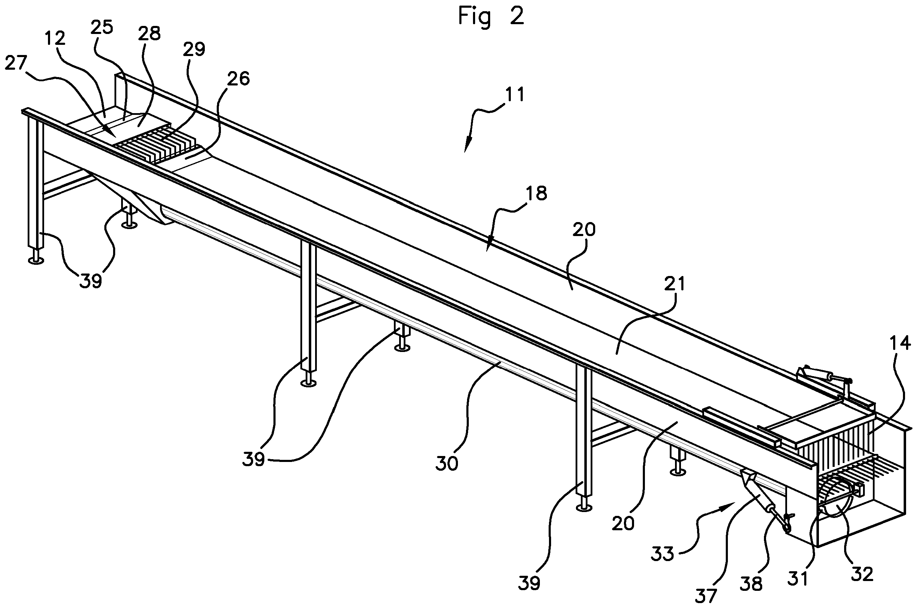

- la figure 2 est un schéma en perspective d'un mode de réalisation possible d'un canal d'accumulation d'un dispositif de groupage selon l'invention,

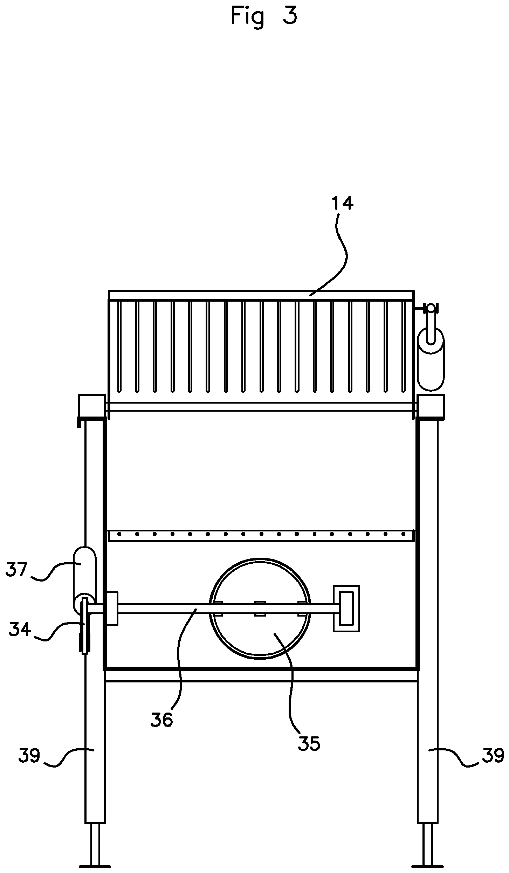

- la figure 3 est une vue schématique en élévation de l'extrémité aval d'un canal d'accumulation d'un dispositif de groupage selon l'invention,
- la figure 4 est une vue schématique en coupe verticale longitudinale d'un canal d'accumulation d'un dispositif de groupage selon l'invention, la vanne de dérivation étant à l'état ouvert,
- la figure 5 est une vue schématique en coupe verticale longitudinale d'un canal d'accumulation d'un dispositif de groupage selon l'invention, la vanne de dérivation étant à l'état fermé.

Le dispositif selon l'invention représenté sur les figures comprend une ligne 10 de convoyage, d'analyse et de tri des objets en fonction de critères prédéterminés, cette ligne 10, dite ligne 10 de calibrage, étant dotée de moyens de déchargement sélectif (non représentés) des objets dans différents canaux d'accumulation 11 qui s'étendent globalement orthogonalement à la ligne 10 de calibrage, avec une portion d'extrémité amont 12 située sous les moyens de déchargement de la ligne 10 de calibrage. Une telle ligne 10 de calibrage est bien connue en elle-même (cf. par exemple notamment EP 0729908, US 7159373, US 5230394, US 5280838, US 5626238, US 6234297...). Elle présente en général différents postes d'analyse des objets (pesage, analyse optique,...). Un tel dispositif peut comprendre un nombre quelconque -par exemple de 5 à 50- canaux 11 d'accumulation parallèles les uns aux autres et qui se jouxtent latéralement, et un canal 15 de collecte s'étendant orthogonalement aux canaux 11 d'accumulation, le long de leurs extrémités aval de sortie.

De préférence, chaque canal 11 d'accumulation est adapté pour pouvoir recevoir un lot d'objets destiné à remplir une unique caisse ou palox, au niveau d'un poste de réception 16 alimenté par le canal 15 de collecte. Néanmoins, cela n'est pas nécessaire et il reste possible que chaque lot d'objets contenu dans un canal d'accumulation et libéré dans le canal 15 de collecte fasse l'objet d'un autre traitement au niveau du poste de réception 16 ou de plusieurs postes de réception. Quoi qu'il en soit, chaque canal 11 d'accumulation présente une longueur suffisante pour pouvoir recevoir tous les objets d'un même lot, devant faire l'objet d'un même traitement ultérieur. En pratique, chaque canal de 11 d'accumulation reçoit des objets présentant des caractéristiques spécifiques vis-à-vis des critères de sélection, par exemple un calibre prédéterminé lorsque les objets sont des fruits ou légumes. Dans un même lot, tous les objets présentent donc les mêmes caractéristiques, notamment le même calibre.

Les canaux 11 d'accumulation sont alimentés et parcourus par un courant hydraulique (en général de l'eau, éventuellement avec des additifs de traitement) généré par un dispositif d'alimentation hydraulique doté de moyens de pompage et de recirculation, tel que décrit dans ses caractéristiques générales par exemple par US7159373. Le courant hydraulique formé dans chaque canal 11 d'accumulation est adapté pour pouvoir assurer le transport des objets au moins semi-flottants dans le courant hydraulique, ce dernier présentant une surface supérieure libre.

Le dispositif d'alimentation hydraulique comprend en particulier une conduite 19 d'alimentation s'étendant le long de toutes les extrémités 12 amont des canaux 11 d'accumulation recevant le flux hydraulique généré par une pompe 22 de recirculation, commune aux différents canaux 11 d'accumulation, elle-même reliée à au moins un poste 16 de réception et à une conduite 17 de recirculation du courant hydraulique en circuit fermé, cette conduite 17 de recirculation reliant la pompe 22 à la conduite 19 d'alimentation.

Le courant hydraulique circule dans les canaux 11 d'accumulation, depuis leur portion amont 12 s'étendant sous les moyens de déchargement de la ligne 10 de calibrage, jusqu'à leur extrémité 13 aval opposée dotée d'un dispositif 14 de retenue/libération permettant, en une position fermée, de retenir les objets dans le canal d'accumulation tout en laissant passer le courant hydraulique, et, en position ouverte, de les libérer sous l'effet du courant hydraulique pour les transférer dans le canal 15 de collecte situé à l'aval de tous les canaux 11 d'accumulation. Ce dispositif 14 de retenue/libération de chaque canal d'accumulation est donc transparent au courant hydraulique circulant dans le canal d'accumulation, y compris lorsque ce dispositif de retenue/libération est en position fermée de retenue des objets dans la zone de superposition. Ce dispositif 14 de retenue/libération peut être formé d'une simple grille mobile, comme décrit par exemple par WO 2012056186. Cela étant, rien n'empêche de prévoir que ce dispositif 14 de retenue/libération ait également pour fonction d'orienter au moins une partie du courant hydraulique vers une zone spécifique du canal de collecte, c'est-à-dire comporte au moins un déflecteur du courant hydraulique.

L'ensemble du dispositif de groupage selon l'invention est piloté par une unité 23 de commande (automate), en général formée d'un système informatique, adaptée pour commander les différents actionneurs, vérins et moteurs de l'ensemble de l'installation, notamment la ligne 10 de calibrage, les moyens de déchargement, les dispositifs 14 de retenue/libération des canaux 11 d'accumulation, le poste 16 de réception, le dispositif d'alimentation hydraulique... Cette unité 33 de commande reçoit aussi différents signaux issus de différents capteurs ou détecteurs du dispositif.

Un dispositif de groupage selon l'invention est par exemple applicable à titre d'unité de calibrage de fruits ou légumes, par exemple de pommes ou de poires, ou autres fruits ou légumes au moins semi-flottants, le poste 16 de réception permettant de conditionner chaque lot d'objets issus d'un canal d'accumulation dans un même emballage, par exemple une caisse à claire-voie et/ou une caisse-palette généralement désignée "palox", tel que décrit par exemple par FR2868042 ou US7159373. En variante, le poste 16 de réception peut être adapté pour transférer chaque lot vers un dispositif de conditionnement individuel ou par groupes des objets du lot.

Dans le mode de réalisation représenté, le dispositif de groupage selon l'invention permet de réaliser, dans chaque canal 11 d'accumulation une superposition des objets en plusieurs couches dans le courant hydraulique du canal 11 d'accumulation, et ce dans une portion du canal d'accumulation, dite zone 18 de superposition, qui est située à l'aval de ladite portion 12 amont du canal 11 d'accumulation. Cette zone 18 de superposition doit présenter une longueur aussi grande que possible vis-à-vis de la longueur totale du canal 11 d'accumulation entre sa portion amont 12 et son extrémité aval 13.

Chaque canal 11 d'accumulation comprend un fond 21 et des parois latérales verticales 20, ce fond 21 et ses parois latérales verticales 20 étant adaptées pour contenir le courant hydraulique. Chaque canal 11 d'accumulation est ouvert vers le haut. Dans l'exemple représenté, le fond 21 du canal 11 d'accumulation est globalement horizontal et les parois latérales verticales 20 sont de hauteur uniforme sur toute la longueur du canal 11 d'accumulation. Rien n'empêche cependant de prévoir que le canal 11 d'accumulation présente une hauteur variable, de préférence augmentant vers l'aval, pour faciliter la superposition des objets dans la zone 18 de superposition.

Quoi qu'il en soit, au moins dans la zone 18 de superposition, la hauteur totale du canal 11 d'accumulation est supérieure à l'encombrement vertical maximum de chaque objet de façon à pouvoir recevoir des objets superposés. De préférence, la hauteur totale du canal 11 d'accumulation est supérieure à deux fois l'encombrement vertical maximum de chaque objet, et est adaptée pour permettre la superposition verticale d'au moins deux objets l'un au-dessus de l'autre dans le courant hydraulique formé dans le canal 11 d'accumulation.

Il est à noter que dans la zone 18 de superposition, les fruits ou légumes au moins semi-flottants ne se superposent pas nécessairement strictement selon des couches uniformes et homogènes, mais au contraire s'imbriquent les uns dans les autres plus ou moins partiellement, certains des objets étant repoussés vers le bas pour une immersion plus importante, d'autres étant éventuellement repoussés le haut et se trouvant moins immergés.

Chaque canal 11 d'accumulation est doté, immédiatement à l'aval de la portion amont 12 de ce dernier recevant les objets déchargés par la ligne 10 de calibrage, d'un ressaut 27 de son fond 21, ce ressaut 27 formant, par rapport à la zone 18 de superposition, une restriction de section ayant pour effet d'accélérer localement la vitesse du courant hydraulique par rapport à la vitesse moyenne du courant hydraulique dans le canal d'accumulation, et en particulier par rapport à la vitesse du courant hydraulique au niveau de ladite portion 12 amont d'alimentation en objets et par rapport à la vitesse du courant hydraulique dans la zone 18 de superposition. Le ressaut 27 du fond 21 de chaque canal 11 d'accumulation est disposé le plus en amont possible dans le canal 11 d'accumulation, immédiatement à l'aval de la portion amont 12 recevant les objets déchargés par la ligne 10 de calibrage.

Le ressaut 27 est formé d'une surélévation du fond 21 par rapport au niveau de ce fond 21 dans la zone 18 de superposition. Ainsi, par exemple, alors que la hauteur du courant hydraulique formé dans le canal 11 d'accumulation est par exemple de l'ordre de 250 mm à 300 mm dans la zone 18 de superposition, ce même courant hydraulique présente une hauteur de l'ordre de 120 mm à 180 mm à l'aplomb du ressaut 27. Le ressaut 27 est relié continûment au fond 21 de la zone 18 de superposition par un pan 26 incliné aval et au fond 21 de la portion 12 amont du canal 11 d'accumulation par un pan 25 incliné amont.

La partie horizontale surélevée formant le ressaut 27 comprend une première portion 28 amont de paroi pleine prolongée vers l'aval par une deuxième portion aval sous forme d'une grille 29 constituant une entrée d'un passage 30 de dérivation du canal 11 d'accumulation. Cette grille 29 permet le passage du liquide formant le courant hydraulique dans le passage 30 de dérivation, mais retient les objets en empêchant que ces derniers passent dans le passage 30 de dérivation.

Le canal 11 d'accumulation est porté par des pieds 39 qui reposent sur le sol, de façon que le fond 21 soit globalement horizontal, de préférence légèrement incliné vers le bas vers l'aval, et situé au-dessus du sol à une hauteur suffisante pour ménager un espace vertical dans lequel peut s'étendre le passage 30 de dérivation formé d'une conduite 30 de dérivation s'étendant à partir de la grille 29 et sous cette dernière, le long du fond 21 du canal d'accumulation et sous ce dernier, jusqu'à une extrémité 31 aval de cette conduite 30 de dérivation qui débouche dans le canal 15 de collecte sous le dispositif 14 de retenue/libération. Il est à noter en particulier que le canal 15 de collecte présente un fond 24 qui est situé en-dessous du fond 21 de chaque canal 11 d'accumulation, de sorte que l'extrémité 31 aval de la conduite 30 de dérivation peut déboucher dans le canal 15 de collecte entre le fond 24 de ce dernier et le fond 21 du canal 11 d'accumulation.

L'extrémité 31 aval de la conduite 30 de dérivation est dotée d'une vanne, dite vanne 32 de dérivation, commandée par un vérin 33, et permettant d'ajuster le débit dérivé du courant hydraulique circulant dans la conduite 30 de dérivation.

Ainsi, lorsque la vanne 32 de dérivation est fermée, l'intégralité du courant hydraulique s'écoule à l'aval du ressaut 27 dans la zone 18 de superposition au-dessus du fond 21 jusqu'au dispositif 14 de retenue/libération.

Par contre, lorsque la vanne 32 de dérivation est ouverte, une partie du courant hydraulique s'écoule par gravité dans la conduite 30 de dérivation par la grille 29 d'entrée et est délivrée dans le canal 15 de collecte par l'extrémité 31 aval de cette conduite 30 de dérivation sans passer à travers les fruits ou légumes accumulés dans la zone 18 de superposition ni par le dispositif 14 de retenue/libération. De la sorte, le débit du courant hydraulique qui passe dans la zone 18 de superposition est d'autant plus faible. La valeur du débit dérivé par la conduite 30 de dérivation dépend du degré d'ouverture de la vanne 32 de dérivation.

Dans l'exemple représenté, la vanne 32 de dérivation est une vanne papillon comprenant un disque 35 mobile entraîné en rotation par un arbre 36 horizontal lui-même entraîné en rotation par le vérin 33 dont le corps 37 est fixé sous une paroi latérale 20 du canal 11 d'accumulation et dont la tige 38 d'actionnement est articulée à une biellette 34 solidaire en rotation de l'arbre 36 de la vanne 32 de dérivation. Chacun des vérins 33 de chaque vanne 32 de dérivation de chaque canal 11 d'accumulation peut être commandé à partir de l'unité 23 de commande.

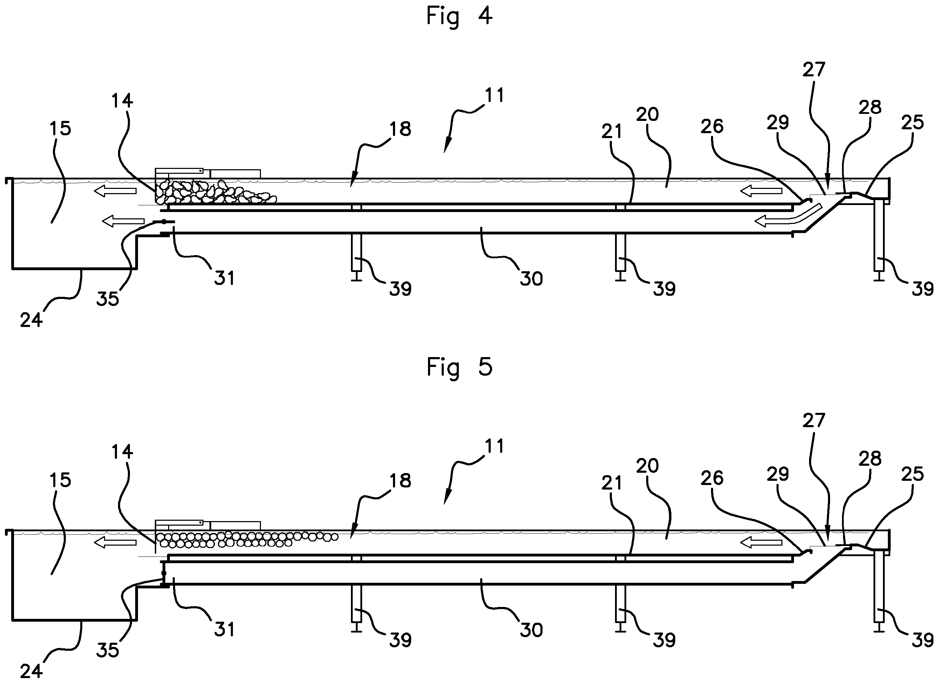

Dans l'état représenté figure 4, on voit que les objets sont par exemple des poires qui sont accumulées contre le dispositif 14 de retenue/libération et superposées dans la zone 18 de superposition, en formant un barrage peu transparent au courant hydraulique. La vanne 32 de dérivation est entièrement ouverte, le courant hydraulique peut en grande partie s'écouler à travers la conduite 30 de dérivation, sans déborder. Au contraire, dans l'état représenté figure 5, les objets sont par exemple des pommes flottant en surface du courant hydraulique et, du fait de leur forme, laissent le courant hydraulique s'écouler à travers le dispositif 14 de retenue/libération. La vanne 32 de dérivation est entièrement fermée, de sorte que tout le débit du courant hydraulique alimenté à l'entrée du canal 11 d'accumulation peut être utilisé pour transporter et superposer les objets dans le canal 11 d'accumulation.

Bien entendu, la vanne 32 de dérivation peut être placée dans une position intermédiaire, en fonction des caractéristiques des objets contenus dans la zone 18 de superposition, et de l'effet de barrage qu'ils produisent vis-à-vis du courant hydraulique. Il est possible de déterminer la position appropriée de chaque vanne 32 de dérivation en fonction des objets traités, et ce par une simple observation du comportement de l'installation. Chaque vanne 32 de dérivation peut être commandée manuellement à partir de l'unité 23 de commande par un opérateur.

Rien n'empêche en variante de prévoir que l'unité 23 de commande exécute un automatisme asservissant la position de la vanne 32 de dérivation à un capteur du niveau du liquide immédiatement à l'aval du ressaut 27, de façon à maintenir la surface du courant hydraulique sous un niveau prédéterminé dans chaque canal 11 d'accumulation.

Il est également possible de prévoir un capteur détecteur de présence d'objets bloqués sur la grille 29 d'entrée du passage 30 de dérivation, l'unité 23 de commande commandant la fermeture de la vanne 32 de dérivation si de tels objets sont détectés, ce qui a pour effet d'annuler le débit qui est dérivé dans le passage 30 de dérivation et d'évacuer les éventuels objets bloqués sur la grille 29 vers l'aval dans le canal d'accumulation.

La vanne 32 de dérivation peut également être utilisée pour faciliter l'évacuation des objets dans le canal de collecte lorsque le dispositif 14 de retenue/libération est placé en position de libération. En effet, la fermeture de la vanne 32 de dérivation a pour effet d'augmenter instantanément le débit du courant hydraulique transportant les objets vers l'aval dans le canal de collecte, ce qui peut permettre d'accélérer le processus d'évacuation est donc d'améliorer la productivité de l'installation.

L'invention peut faire l'objet de nombreuses variantes et applications autres que celles décrites ci-dessus. En particulier, il va de soi que sauf indication contraire les différentes caractéristiques structurelles et fonctionnelles du mode de réalisation décrit ci-dessus ne doivent pas être considérées comme combinées et/ou étroitement et/ou inextricablement liées les unes aux autres. En outre, ces caractéristiques structurelles et/ou fonctionnelle peuvent faire l'objet en tout ou partie de tout groupement, sous groupement, juxtaposition ou combinaison.

Par exemple, les conduites 30 de dérivation peuvent être remplacées par des canaux de dérivation et/ou disposées entre les canaux 11 d'accumulation ; un même passage 30 de dérivation peut recevoir du courant hydraulique en provenance de plusieurs canaux 11 d'accumulation ; un même canal 11 d'accumulation peut comporter plusieurs passages 30 de dérivation ; un même passage 30 de dérivation peut recevoir du courant hydraulique à partir de plusieurs entrées différentes situées à différents endroits d'un même canal 11 d'accumulation ou de plusieurs canaux 11 d'accumulation différents ; une entrée de chaque conduite 30 de dérivation peut être prévue sur le fond 21 du canal 11 d'accumulation à un autre endroit que le ressaut 27 et/ou au niveau des parois latérales du canal 11 d'accumulation ; les vannes 32 de dérivation peuvent faire l'objet de toutes variantes de réalisation autre que des vannes papillon ; si les passages 30 de dérivation sont de préférence des passages de liquide dans lequel le courant hydraulique peut circuler par simple gravité, rien n'empêche d'alimenter tout ou partie des passages 30 de dérivation par un dispositif de pompage...

## Revendications

1. - Dispositif de groupage en lots d'objets au moins semi-flottants appartenant au groupe des fruits et légumes comprenant :
- une pluralité de canaux, dit canaux (11) d'accumulation, permettant de regrouper les objets par lots,
- un dispositif d'alimentation hydraulique adapté pour former, dans chaque canal (11) d'accumulation, un débit d'un courant hydraulique apte à transporter les objets le long du canal d'accumulation,
- un dispositif (10) d'alimentation en objets d'une portion amont de chaque canal d'accumulation,
- un canal hydraulique, dit canal (15) de collecte, à l'aval de et en communication avec chaque canal (11) d'accumulation de façon à pouvoir recevoir le courant hydraulique et des objets évacués par le canal (11) d'accumulation,
dispositif dans lequel chaque canal (11) d'accumulation est doté, à une extrémité (13) aval de ce dernier, d'un dispositif (14) de retenue/libération des objets qu'il contient, ce dispositif
(14) de retenue/libération étant transparent au courant hydraulique circulant dans le canal (11) d'accumulation, et permettant, en une position fermée, de retenir les objets dans le canal d'accumulation tout en laissant passer le courant hydraulique, et, en position ouverte, de les libérer sous l'effet du courant hydraulique pour les transférer dans le canal (15) de collecte,
- chaque canal (11) d'accumulation présente, au moins dans une portion aval de ce dernier, dite zone (18) de superposition, une hauteur supérieure à l'encombrement vertical maximum de chaque objet de façon à pouvoir recevoir des objets superposés **caractérisé en ce que** chaque canal d'accumulation (11) comprend au moins un passage (30) de dérivation du courant hydraulique :
- s'étendant depuis au moins une entrée (29) du passage (30) de dérivation située à l'amont du dispositif (14) de retenue/libération et à l'amont de la zone (18) de superposition, jusqu'à au moins une sortie du passage (30) de dérivation débouchant à l'aval du dispositif (14) de retenue/libération,
- adapté pour dériver une partie du débit du courant hydraulique formé par le dispositif d'alimentation hydraulique.

2. - Dispositif selon la revendication 1 **caractérisé en ce que** ledit dispositif d'alimentation hydraulique est adapté pour pouvoir former dans chaque canal (11) d'accumulation un courant hydraulique présentant au moins localement une vitesse apte à entraîner une superposition des objets retenus dans la zone (18) de superposition du canal (11) d'accumulation contre le dispositif (14) de retenue/libération fermé de façon à retenir les objets.

3. - Dispositif selon la revendication 2 **caractérisé en ce qu'**il comprend des moyens de réglage du débit de liquide délivré dans une entrée (12) amont de chaque canal d'accumulation.

4. - Dispositif selon l'une des revendications 1 à 3 **caractérisé en ce que** ledit dispositif d'alimentation hydraulique comprend, à l'amont de chaque canal (11) d'accumulation, une vanne commandée, dite vanne de canal, agencée de façon à pouvoir être placée au moins dans une position correspondant à une valeur de vitesse du courant hydraulique apte à entraîner une superposition des objets dans la zone (18) de superposition du canal (11) d'accumulation contre le dispositif (14) de retenue/libération fermé de façon à retenir les objets.

5. - Dispositif selon l'une des revendications 1 à 4 **caractérisé en ce que** chaque canal (11) d'accumulation comprend un fond (21), des parois (20) latérales et, à l'amont de ladite zone (18) de superposition, un ressaut (27) par rapportau fond (21) formant une restriction de section transversale du canal d'accumulation.

6. - Dispositif selon l'une des revendications 1 à 5 **caractérisé en ce que en ce que** chaque canal (11) d'accumulation comprend un fond (21), des parois (20) latérales et au moins un passage de dérivation s'étendant depuis au moins une entrée (29) ménagée dans le fond (21) du canal (11) d'accumulation.

7. - Dispositif selon les revendications 5 et 6 **caractérisé en ce que** chaque canal (11) d'accumulation comprend au moins un passage (30) de dérivation s'étendant depuis au moins une entrée (29) ménagée dans une zone du fond (21) comprenant ledit ressaut (27).

8. - Dispositif selon la revendication 7 **caractérisé en ce que** chaque canal (11) d'accumulation comprend au moins un passage (30) de dérivation s'étendant depuis au moins une entrée (29) formée par une grille formant au moins pour partie ledit ressaut (27).

9. - Dispositif selon la revendication 8 **caractérisé en ce que** ledit ressaut (27) comprend une partie amont pleine et une partie aval formant ladite grille (29) d'entrée d'un passage (30) de dérivation.

10. - Dispositif selon l'une des revendications 1 à 9 **caractérisé en ce que** chaque passage (30) de dérivation présente une sortie (31) débouchant dans ledit canal (15) de collecte.

11. - Dispositif selon l'une des revendications 1 à 10 **caractérisé en ce qu'**au moins un passage (30) de dérivation de chaque canal d'accumulation est formé d'une conduite s'étendant sous le canal (11) d'accumulation.

12. - Dispositif selon l'une des revendications 1 à 11 **caractérisé en ce qu'**au moins un passage (30) de dérivation de chaque canal (11) d'accumulation comprend une vanne, dite vanne (32) de dérivation, adaptée pour permettre un ajustement de ladite partie du débit dérivée.

13. - Dispositif selon la revendication 12 **caractérisé en ce que** ladite vanne (32) de dérivation est disposée à une extrémité (31) aval dudit passage (30) de dérivation.

14. - Dispositif selon l'une quelconque des revendications 12 ou 13 **caractérisé en ce que** chaque vanne (32) de dérivation comporte un dispositif (33) de commande individuelle adapté pour permettre un ajustement individuel de ladite partie du débit dérivée du canal (11) d'accumulation indépendamment de la dite partie du débit dérivée de chaque autre canal (11) d'accumulation.

15. - Dispositif selon l'une des revendications 1 à 14 **caractérisé en ce que** ledit dispositif (10) d'alimentation en objets est un dispositif d'alimentation sélective comprenant au moins une ligne, dite ligne (10) de calibrage, de convoyage, d'analyse et de tri des objets en fonction de critères prédéterminés, ladite ligne de calibrage comprenant des moyens de déchargement sélectif des objets dans des portions (12) d'extrémité amont des différents canaux (11) d'accumulation.

## Patentansprüche

1. Vorrichtung zum Gruppieren von zumindest halbschwimmenden Objekten, die zu der Gruppe Obst und Gemüse gehören, in Chargen, umfassend:
- eine Vielzahl von Kanälen, bezeichnet als Akkumulationskanäle (11), die es ermöglichen, die Objekte in Chargen zusammenzufassen,
- eine hydraulische Zuführvorrichtung, die angepasst ist, um in jedem Akkumulationskanal (11) einen Durchfluss eines hydraulischen Stroms zu bilden, der geeignet ist, um die Objekte entlang des Akkumulationskanals zu transportieren,
- eine Vorrichtung (10) zum Zuführen von Objekten zu einem stromaufwärtigen Abschnitt von jedem Akkumulationskanal,
- einen hydraulischen Kanal, bezeichnet als Sammelkanal (15), stromabwärts von und in Verbindung mit jedem Akkumulationskanal (11), um den hydraulischen Strom und die durch den Akkumulationskanal (11) evakuierten Objekte aufzunehmen zu können, wobei jeder Akkumulationskanal (11) an einem stromabwärtigen Ende (13) davon mit einer Vorrichtung (14) zum Zurückhalten/Freigeben der darin enthaltenen Objekte versehen ist, wobei diese Rückhalte-/Freigabevorrichtung (14) für den in dem Akkumulationskanal (11) fließenden Hydraulikstrom transparent ist und es ermöglicht, in einer geschlossenen Stellung die Objekte in dem Akkumulationskanal zurückzuhalten, während der Hydraulikstrom hindurchfließt, und in einer offenen Stellung die Objekte unter der Wirkung des Hydraulikstroms freizugeben, um sie in den Sammelkanal (15) zu überführen,
- wobei jeder Akkumulationskanal (11) zumindest in einem stromabwärtigen Abschnitt davon, bezeichnet als Überlagerungsbereich (18), eine Höhe aufweist, die größer ist als der maximale vertikale Platzbedarf von jedem Objekt, sodass er überlagerte Objekte aufnehmen kann, und **dadurch gekennzeichnet, dass** jeder Akkumulationskanal mindestens einen Durchgang (30) zum Abzweigen des Hydraulikstroms umfasst:
- sich von mindestens einem Eingang (29) des Umgehungsdurchgangs (30), der sich stromaufwärts der Rückhalte-/Freigabevorrichtung (14) und stromaufwärts der Überlagerungszone (18) befindet, bis zu mindestens einem Ausgang des Umgehungsdurchgangs (30) erstreckt, der stromabwärts von der Rückhalte-/Freigabevorrichtung (14) mündet,
- geeignet ist, um einen Teil des Durchflusses des von der hydraulischen Zufuhrvorrichtung gebildeten Hydraulikstroms abzuzweigen.

2. Vorrichtung nach Anspruch 1, **dadurch gekennzeichnet, dass** die hydraulische Zufuhrvorrichtung angepasst ist, um in jedem Akkumulationskanal (11) einen Hydraulikstrom bilden zu können, der zumindest lokal eine Geschwindigkeit aufweist, die geeignet ist, um eine Überlagerung der in der Überlagerungszone (18) des Akkumulationskanals (11) zurückgehaltenen Objekte gegen die geschlossene Rückhalte-/Freigabevorrichtung (14) zu bewirken, um die Objekte zurückzuhalten.

3. Vorrichtung nach Anspruch 2, **dadurch gekennzeichnet, dass** sie Einrichtungen zur Regulierung des Flüssigkeitsdurchsatzes umfasst, der in einen stromaufwärtigen Einlass (12) von jedem Akkumulationskanals zugeführt wird.

4. Vorrichtung nach einem der Ansprüche 1 bis 3, **dadurch gekennzeichnet, dass** die hydraulische Zufuhrvorrichtung stromaufwärts von jedem Akkumulationskanal (11) ein gesteuertes Ventil, bezeichnet als Kanalventil, umfasst, das angeordnet ist, um zumindest in eine Position gebracht werden zu können, die einem Geschwindigkeitswert des Hydraulikstroms entspricht, der geeignet ist, eine Überlagerung der Objekte in dem Überlagerungsbereich (18) des Akkumulationskanals (11) gegen die geschlossene Rückhalte-/Freigabevorrichtung (14) zu bewirken, um die Objekte zurückzuhalten.

5. Vorrichtung nach einem der Ansprüche 1 bis 4, **dadurch gekennzeichnet, dass** jeder Akkumulationskanal (11) einen Boden (21), Seitenwände (20) und stromaufwärts von dem Überlagerungsbereich (18) einen Vorsprung (27) in Bezug auf den Boden (21) umfasst, der eine Querschnittsverengung des Akkumulationskanals bildet.

6. Vorrichtung nach einem der Ansprüche 1 bis 5, **dadurch gekennzeichnet, dass** jeder Akkumulationskanal (11) einen Boden (21), Seitenwände (20) und mindestens einen Abzweigungsdurchgang umfasst, der sich von mindestens einem Eingang (29) aus erstreckt, der in dem Boden (21) des Akkumulationskanals (11) gebildet ist.

7. Vorrichtung nach den Ansprüchen 5 und 6, **dadurch gekennzeichnet, dass** jeder Akkumulationskanal (11) mindestens einen Abzweigungsdurchgang (30) umfasst, der sich von mindestens einem Eingang (29) erstreckt, der in einem Bereich des Bodens (21) gebildet ist, der den Vorsprung (27) umfasst.

8. Vorrichtung nach Anspruch 7, **dadurch gekennzeichnet, dass** jeder Akkumulationskanal (11) mindestens einen Abzweigungsdurchgang (30) umfasst, der sich von mindestens einem Eingang (29) erstreckt, der durch ein Gitter gebildet ist, das zumindest teilweise den Vorsprung (27) bildet.

9. Vorrichtung nach Anspruch 8, **dadurch gekennzeichnet, dass** der Vorsprung (27) einen massiven stromaufwärtigen Abschnitt und einen stromabwärtigen Abschnitt umfasst, der das Eingangsgitter (29) eines Abzweigungsdurchgangs (30) bildet.

10. Vorrichtung nach einem der Ansprüche 1 bis 9, **dadurch gekennzeichnet, dass** jeder Abzweigdurchgang (30) einen Ausgang (31) aufweist, der in den Sammelkanal (15) mündet.

11. Vorrichtung nach einem der Ansprüche 1 bis 10, **dadurch gekennzeichnet, dass** mindestens ein Abzweigungsdurchgang (30) von jedem Akkumulationskanal von einer Leitung gebildet wird, die sich unter dem Akkumulationskanal (11) erstreckt.

12. Vorrichtung nach einem der Ansprüche 1 bis 11, **dadurch gekennzeichnet, dass** mindestens ein Abzweigungsdurchgang (30) von jedem Akkumulationskanals (11) ein Ventil, bezeichnet als Abzweigungsventil (32), umfasst, das angepasst ist, um eine Einstellung des abgezweigten Abschnitts des Durchflusses zu ermöglichen.

13. Vorrichtung nach Anspruch 12, **dadurch gekennzeichnet, dass** das Abzweigungsventil (32) an einem stromabwärtigen Ende (31) des Abzweigungsdurchgangs (30) angeordnet ist.

14. Vorrichtung nach einem der Ansprüche 12 oder 13, **dadurch gekennzeichnet, dass** jedes Abzweigungsventil (32) eine individuelle Steuervorrichtung (33) umfasst, die angepasst ist, um eine individuelle Einstellung des Abschnitts des Durchflusses, der von dem Akkumulationskanal (11) abgezweigt wird, unabhängig von dem Abschnitt des Durchflusses, der von jedem anderen Akkumulationskanal (11) abgezweigt wird, zu ermöglichen.

15. Vorrichtung nach einem der Ansprüche 1 bis 14, **dadurch gekennzeichnet, dass** die Zufuhrvorrichtung (10) von Objekten eine Vorrichtung zur selektiven Zuführung ist, umfassend mindestens eine Linie, bezeichnet als Kalibrierungslinie (10), zur Förderung, Analyse und Sortierung der Objekte abhängig von vorbestimmten Kriterien, wobei die Kalibrierungslinie Einrichtungen zur selektiven Entladung der Objekte in stromaufwärtige Endabschnitte (12) der verschiedenen Sammelkanäle (11) umfasst.

## Claims

1. - A device for grouping into batches at least semi-buoyant objects belonging to the group of fruit and vegetables, comprising:
- a plurality of channels, called accumulation channels (11), allowing said objects to be grouped into batches,
- a hydraulic supply device adapted to form, in each accumulation channel (11), a flow of a hydraulic stream able to transport the objects along the accumulation channel,
- an object supply device (10) for supplying objects to an upstream portion of each accumulation channel,
- a hydraulic channel, called collecting channel (15), downstream of and in communication with each accumulation channel (11) so as to be able to receive the hydraulic stream and the objects discharged by the accumulation channel (11),
- in which device each accumulation channel (11) is provided, at a downstream end (13) thereof, with a holding/releasing device (14) for holding/releasing the objects contained therein, this holding/releasing device (14) being transparent with respect to the hydraulic stream flowing in the accumulation channel (11) and allowing, in a closed position, the objects to be held in the accumulation channel while allowing the hydraulic stream to pass therethrough and, in the open position, allowing them to be released under the effect of the hydraulic stream to transfer them into the collecting channel (15),
- each accumulation channel (11) has, at least in a downstream portion thereof, called superposition zone (18), a height greater than the maximum vertical size of each object so as to be able to receive superposed objects, and **characterized in that** each accumulation channel (11) comprises at least one bypass passage (30) for the hydraulic stream:
- extending from at least one inlet (29) of the bypass passage (30) located upstream of the holding/releasing device (14) and upstream of the superposition zone (18), to at least one outlet of the bypass passage (30) opening out downstream of the holding/releasing device (14),
- suitable for diverting some of the flow of the hydraulic stream formed by the hydraulic supply device.

2. - The device according to claim 1, **characterized in that** said hydraulic supply device is suitable for being able to form, in each accumulation channel (11), a hydraulic stream at least locally having a speed able to cause a superposition of the objects held in the superposition zone (18) of the accumulation channel (11) against the closed holding/releasing device (14) so as to hold the objects.

3. - The device according to claim 2, **characterized in that** it comprises means for adjusting the flow rate of liquid delivered to an upstream inlet (12) of each accumulation channel.

4. - The device according to one of claims 1 to 3, **characterized in that** said hydraulic supply device comprises, upstream of each accumulation channel (11), a controlled valve, called channel valve, arranged to be able to be placed at least in a position corresponding to a speed value of the hydraulic stream able to cause a superposition of the objects in the superposition zone (18) of the accumulation channel (11) against the closed holding/releasing device (14) so as to hold the objects.

5. - The device according to one of claims 1 to 4, **characterized in that** each accumulation channel (11) comprises a bottom (21), side walls (20) and, upstream of said superposition zone (18), an elevation (27) with respect to the bottom (21) forming a reduction in the cross-section of the accumulation channel.

6. - The device according to one of claims 1 to 5, **characterized in that** each accumulation channel (11) comprises a bottom (21), side walls (20) and at least one bypass passage extending from at least one inlet (29) provided in the bottom (21) of the accumulation channel (11).

7. - The device according to claims 5 and 6, **characterized in that** each accumulation channel (11) comprises at least one bypass passage (30) extending from at least one inlet (29) provided in a zone of the bottom (21) comprising said elevation (27).

8. - The device according to claim 7, **characterized in that** each accumulation channel (11) comprises at least one bypass passage (30) extending from at least one inlet (29) formed by a grating forming at least part of said elevation (27).

9. - The device according to claim 8, **characterized in that** said elevation (27) comprises a solid upstream part and a downstream part forming said inlet grating (29) of the bypass passage (30).

10. - The device according to one of claims 1 to 9, **characterized in that** each bypass passage (30) has an outlet (31) opening out into said collecting channel (15).

11. - The device according to one of claims 1 to 10, **characterized in that** at least one bypass passage (30) of each accumulation channel is formed by a conduit extending beneath the accumulation channel (11).

12. - The device according to one of claims 1 to 11, **characterized in that** at least one bypass passage (30) of each accumulation channel (11) comprises a valve, called bypass valve (32), suitable for allowing adjustment of said portion of the diverted flow.

13. - The device according to claim 12, **characterized in that** said bypass valve (32) is arranged at a downstream end (31) of said bypass passage (30).

14. - The device according to any one of claims 12 or 13, **characterized in that** each bypass valve (32) comprises an individual control device (33) suitable for allowing individual adjustment of said portion of the flow diverted from the accumulation channel (11) independently of said portion of the flow diverted from each other accumulation channel (11).

15. - The device according to one of claims 1 to 14, **characterized in that** said device (10) for supplying objects is a selective supply device comprising at least one line, called grading line, for conveying, analyzing and sorting objects based on predetermined criteria, said grading line comprising means for selectively discharging the objects into upstream end portions (12) of the different accumulation channels (11).
